# EUROPEAN PATENT SPECIFICATION

(11) **EP 3 567 987 B1**
(45) Date of publication and mention of the grant of the patent: **25.11.2020**
(21) Application number: 18171367.8
(22) Date of filing: 08.05.2018
(51) Int. Cl.: H05B 6/12

(54) **INDUCTION COIL ASSEMBLY**
INDUKTIONSSPULENANORDNUNG
ENSEMBLE DE BOBINE D'INDUCTION

(43) Date of publication of application: 13.11.2019
(73) Proprietor: Whirlpool Corporation, Benton Harbor, MI 49022 (US)
(72) Inventor: Chinazzo, Fabiano, 21024 Biandronno - Frazione Cassinetta (IT); Mungo, Gaetano, 21024 Biandronno - Frazione Cassinetta (IT); Partegiani, Francesca, 21024 Biandronno - Frazione Cassinetta (IT)
(74) Representative: Spina, Alessandro

(56) References cited:
- EP-A1- 2 632 230
- WO-A1-2011/138715
- US-A1- 2010 282 737

## Description

The present invention relates to an induction coil assembly comprising a bottom plate on which an induction heating element is placed, such induction heating element comprising a coil mounted on a support element, means being provided for fastening the heating element to the bottom plate.

An induction coil assembly of the above type is disclosed by WO2015/049602 in which the means for fastening the heating element to the bottom plate comprises hook-shaped elements on the outer edge of a disc-shaped support element. This construction implies that each disc-shaped support element must have the above hook-shaped fastening element corresponding to specific apertures in the bottom plate. This increases the complexity of the induction coil assembly.

Another induction coil assembly according to the prior art can be seen in EP2632230.

It is an object of the present invention to provide an induction coil assembly with a simpler way of fixing the heating element to the bottom plate.

This object is reached thanks to the features listed in the appended claims.

By using a central fix and turn element which cooperates with a shaped opening in the bottom plate it is possible to use the identical fastening device for a plurality of heating elements of different dimensions. This standardization of components allows a reduction of the overall cost of the induction coil assembly and it increases flexibility since it can be used with coils having different shapes and dimensions.

The support element may have various shapes, even if the disc-shape configuration is the most ususal.

Further advantages and features of the above induction coil assembly will be clear from the following detailed description, provided as a non limiting example, with reference to the attached drawings in which:
- Fig. 1 is a perspective view of a induction coil assembly according to the invention;
- Fig. 2A and 2B are exploded perspective views of two embodiments of the invention;
- Figs. 3A and 3B are section views of the embodiments of figs. 2A and 2B;
- Figs. 4 and 5 are perspective views, from the top and from the bottom respectively, of a central fix and turn element according to the invention.

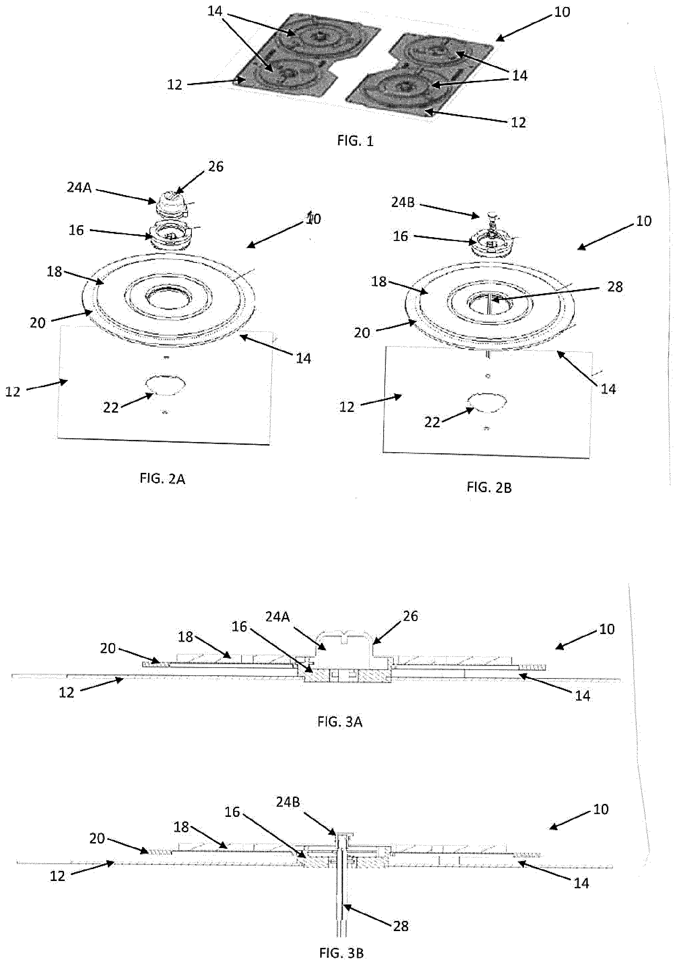

With reference to figs. 1-2B, a cooktop assembly 10 includes a substrate 12 containing at least one coil assembly 14. The substrate 12 is usually an aluminum plate which acts as a partition element and on which heating coils are mounted. As shown in figs. 2A and 2B, each coil assembly 14 is connected to the substrate 12 by a central fix and turn element 16. The fix and turn element 16 extends through a shaped opening 22 defined by the substrate 12 and couples the coil 18 and the coil wire support 20 to the substrate 12. The shaped opening presents a plurality of notches configured to cooperate with the fix and turn element 16 for fastening the heating element. The plastic support usually comprises ferrite bars (not shown) for shielding the electromagnetic field. The fix and turn element 16 also functions as a receptacle for a sensor 24A (fig. 2A) or 24B (fig. 2B) for the coil assembly 14. The sensor 24A, 24B removable fits within the top portion of the fix and turn element 16, allowing the fix and turn element 16 to be assembled with the substrate 12 separately from the coil assembly 14. Further, the fix and turn element 16 can be configured to receive a variety of sensor holder or spring types as needed, for instance temperature sensors, depending on the particular coil assembly 14. For example, Fig. 2A shows an embodiment wherein the sensor 24A includes a cover 26. Fig. 2B shows a second embodiment wherein the sensor 24B includes wiring 28 extending down through the coil 18, plastic support 20, and substrate 12, both of which can be used interchangeably with the fix and turn element 16.

Referring to figs. 3A and 3B, the fix and turn element 16 is shown fully engaged with the substrate 12 to retain the coil assembly 14. Because the fix and turn element 16 retains the coil assembly 14 within the center thereof, a standard size and shape can be used to couple coil assemblies 14 of various sizes and shapes to the substrate 12, eliminating the need for numerous connection options and allowing faster assembly of the coil 14.

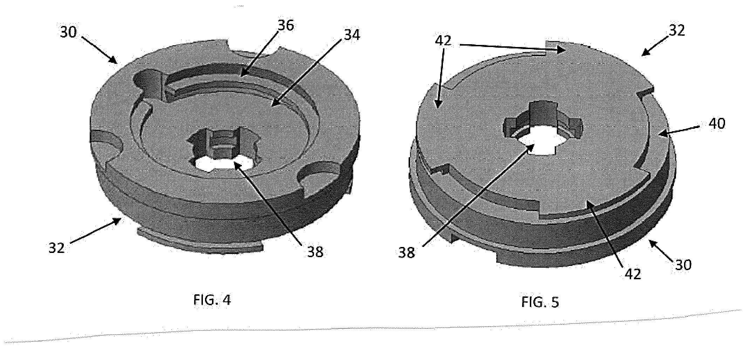

Referring now to figs. 4 and 5, a detailed view of the fix and turn element 16 is shown. The fix and turn element 16 includes a top portion 30 and a bottom portion 32. The top portion 30 includes a recess 34 with a step portion 36 to engage with various embodiments of the above-described sensor holder or spring. The top portion defines an opening 38 that extends through the bottom portion, for example, to allow for wiring to reach the board sensor connector. The bottom portion 32 includes a continuous lower surface 40 and a plurality of flanges 42 spaced vertically from the surface 40 and radially from each other to pass through an opening in the substrate 12, when inserted in a first position, until the surface 40 moves into contact with substrate 12. The fix and turn element 16 is then rotated into a second position wherein portions of the substrate 12 are captured between the flanges 42 and surface 40. This fixed second position prevents the fix and turn element 16 from detaching from the substrate 12, allowing it to hold a corresponding coil assembly in place.

## Claims

1. An induction coil assembly (10) comprising a bottom plate (12) on which an induction heating element (14) is placed, the induction heating element (14) comprising a coil (18) mounted on a support (20) element, means being provided for fastening the heating element (14) to the bottom plate (12), **characterized in that** the means for fastening the heating element (14) to the bottom plate (12) comprise a central fix and turn element (16) configured to cooperate with a central aperture (22) of the bottom plate (12), wherein the central fix and turn element (16) comprises radial flanges (42) adapted to cooperate, in a bayonet movement, with corresponding radial notches in the central aperture (22).

2. An induction coil assembly according to claim 1, wherein the central fix and turn element (16) is made of polymeric material.

3. An induction coil assembly according to any of the preceding claims, wherein the central fix and turn element (16) presents a seat for a sensor holder or spring or similar mechanical devices (26, 24A, 24B) designed to allocate a sensor.

4. An induction coil assembly according to claim 3, wherein the sensor (24B) is a temperature sensor.

5. An induction coil assembly according to claim 3 or 4, wherein the central fix and turn element (16) presents a central aperture (38) for passage of sensor wires (28).

6. An induction coil assembly according to any of the preceding claims, wherein the support element (20) is made of polymeric material.

7. An induction coil assembly according to any of the preceding claims, wherein the support element (20) is disc-shaped.

## Patentansprüche

1. Induktionsspulenanordnung (10), umfassend eine Bodenplatte (12), auf der ein Induktionsheizungselement (14) platziert ist, wobei das Induktionsheizungselement (14) eine Spule (18) umfasst, die auf einem Trägerelement (20) montiert ist, wobei Mittel zum Befestigen des Heizungselements (14) an der Bodenplatte (12) bereitgestellt sind, **dadurch gekennzeichnet, dass** die Mittel zum Befestigen des Heizungselements (14) an der Bodenplatte (12) ein zentrales Fixierungs- und Drehelement (16) umfassen, das konfiguriert ist, um mit einer zentralen Öffnung (22) der Bodenplatte (12) zusammenzuwirken, wobei das zentrale Fixierungs- und Drehelement (16) radiale Flansche (42) umfasst, die ausgeführt sind, um in einer Bajonettbewegung mit entsprechenden radialen Aussparungen in der zentralen Öffnung (22) zusammenzuwirken.

2. Induktionsspulenanordnung nach Anspruch 1, wobei das zentrale Fixierungs- und Drehelement (16) aus einem Polymermaterial gefertigt ist.

3. Induktionsspulenanordnung nach einem der vorstehenden Ansprüche, wobei das zentrale Fixierungs- und Drehelement (16) einen Sitz für einen Sensorhalter oder Feder oder ähnliche mechanische Vorrichtungen (26, 24A, 24B) aufweist, die gestaltet sind, um einen Sensor zuzuweisen.

4. Induktionsspulenanordnung nach Anspruch 3, wobei der Sensor (24B) ein Temperatursensor ist.

5. Induktionsspulenanordnung nach Anspruch 3 oder 4, wobei das zentrale Fixierungs- und Drehelement (16) eine zentrale Öffnung (38) zum Durchlass von Sensordrähten (28) aufweist.

6. Induktionsspulenanordnung nach einem der vorstehenden Ansprüche, wobei das Trägerelement (20) aus einem Polymermaterial gefertigt ist.

7. Induktionsspulenanordnung nach einem der vorstehenden Ansprüche, wobei das Trägerelement (20) scheibenförmig ist.

## Revendications

1. Ensemble de bobine d'induction (10) comprenant une plaque inférieure (12) sur laquelle est placé un élément de chauffage par induction (14), l'élément de chauffage par induction (14) comprenant une bobine (18) montée sur un élément de support (20), des moyens étant prévus pour fixer l'élément de chauffage (14) à la plaque inférieure (12), **caractérisé en ce que** les moyens pour fixer l'élément de chauffage (14) à la plaque inférieure (12) comprennent un élément de fixation et de rotation central (16) configuré pour coopérer avec une ouverture centrale (22) de la plaque inférieure (12), dans lequel l'élément de fixation et de rotation central (16) comprend des rebords radiaux (42) adaptés pour coopérer, dans un mouvement de baïonnette, avec des encoches radiales correspondantes dans l'ouverture centrale (22).

2. Ensemble de bobine d'induction selon la revendication 1, dans lequel l'élément de fixation et de rotation central (16) est constitué de matériau polymère.

3. Ensemble de bobine d'induction selon l'une quelconque des revendications précédentes, dans lequel l'élément de fixation et de rotation central (16) présente un siège pour un support ou ressort de capteur ou des dispositifs mécaniques similaires (26, 24A, 24B) conçus pour positionner un capteur.

4. Ensemble de bobine d'induction selon la revendication 3, dans lequel le capteur (24B) est un capteur de température.

5. Ensemble de bobine d'induction selon la revendication 3 ou 4, dans lequel l'élément de fixation et de rotation central (16) présente une ouverture centrale (38) pour le passage de câbles de capteur (28).

6. Ensemble de bobine d'induction selon l'une quelconque des revendications précédentes, dans lequel l'élément de support (20) est constitué de matériau polymère.

7. Ensemble de bobine d'induction selon l'une quelconque des revendications précédentes, dans lequel l'élément de support (20) est en forme de disque.
